(19) Europäisches Patentamt / European Patent Office / Office européen des brevets

(11) **EP 4 432 377 A2**

(12) **EUROPEAN PATENT APPLICATION**

(43) Date of publication:
**18.09.2024 Bulletin 2024/38**

(21) Application number: **24163987.1**

(22) Date of filing: **15.03.2024**

(51) International Patent Classification (IPC):
**H01M 4/02** *(2006.01)*

(52) Cooperative Patent Classification (CPC):
**H01M 4/02; H01M 2004/027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 CN 202310261400**

(71) Applicant: **Xiamen Ampace Technology Limited**
**Xiamen City, Fujian Province 361000 (CN)**

(72) Inventors:
• **WANG, Chuanwei**
**Xiamen City, Fujian Province, People s Republic of**
**China, 361000 (CN)**

• **CAO, Yi**
**Xiamen City, Fujian Province, People s Republic of**
**China, 361000 (CN)**
• **LIANG, Yongpeng**
**Xiamen City, Fujian Province, People s Republic of**
**China, 361000 (CN)**
• **WANG, Huixin**
**Xiamen City, Fujian Province, People s Republic of**
**China, 361000 (CN)**

(74) Representative: **Icosa**
**83 avenue Denfert-Rochereau**
**75014 Paris (FR)**

(54) **NEGATIVE ELECTRODE PLATE, SECONDARY BATTERY, AND ELECTRONIC APPARATUS**

(57) A negative electrode plate includes a negative electrode material. The negative electrode material includes a matrix material, and a fast ion conductor is present on a surface of the matrix material. The fast ion conductor is a lithium lanthanum zirconium oxide. $D_v50$ of the matrix material is $D_1$ $\mu$m, and $D_v50$ of the fast ion conductor is $D_2$ $\mu$m, where $D_2/D_1 \leq 0.1$ and $0.05 \leq D_2 \leq 1$.

FIG. 1

EP 4 432 377 A2

**Description**

**TECHNICAL FIELD**

This application relates to the field of electrochemical technologies, and in particular, to a negative electrode plate, a secondary battery, and an electronic apparatus.

**BACKGROUND**

Secondary batteries, such as lithium-ion batteries, have been widely used in the field of consumer electronics by virtue of their characteristics such as high specific energy, high working voltage, low self-discharge rate, small size, and light weight.

With the wide use of lithium-ion batteries, the market imposes increasingly high requirements for the performance of lithium-ion batteries. For example, lithium-ion batteries generate a significant amount of heat in high-power application scenarios, which requires lithium-ion batteries to minimize the stability and safety risks caused by high temperature.

**SUMMARY**

This application is intended to provide a negative electrode plate, a secondary battery, and an electronic apparatus, so as to improve stability and safety of the secondary battery. Specific technical solutions are as follows:

A first aspect of this application provides a negative electrode plate including a negative electrode material, where the negative electrode material includes a matrix material, and a fast ion conductor is present on a surface of the matrix material, where the fast ion conductor is a lithium lanthanum zirconium oxide; and $D_v50$ of the matrix material is $D_1$ μm, and $D_v50$ of the fast ion conductor is $D_2$ μm, where $D_2/D_1 \leq 0.1$ and $0.05 \leq D_2 \leq 1$. The negative electrode plate provided in this application meets the foregoing characteristics, and can reduce gas production and temperature rise of the secondary battery, thereby achieving the technical effect of improving stability and safety of the secondary battery.

In some embodiments of this application, $0.03 \leq D_2/D_1 \leq 0.07$. $D_2/D_1$ being within the foregoing range is conducive to further reducing the gas production of the secondary battery.

In some embodiments of this application, $0.3 \leq D_2 \leq 0.7$. $D_2$ being within the foregoing range is conducive to further reducing the gas production of the secondary battery.

In some embodiments of this application, $D_v99$ of the fast ion conductor is $D_3$ μm, where $0.25 \leq D_2/D_3 < 1$. Controlling $D_2/D_3$ within the foregoing range is conducive to further reducing the gas production of the secondary battery.

In some embodiments of this application, $0.5 \leq D_2/D_3 \leq 0.67$. Controlling $D_2/D_3$ within the foregoing range can further reduce the gas production of the secondary battery.

In some embodiments of this application, an ionic conductivity of the fast ion conductor is $1.44 \times 10^{-5}$ S/m to $1.09 \times 10^{-3}$ S/m. Controlling the ionic conductivity of the fast ion conductor within the foregoing range is conducive to further reducing the temperature rise during discharging of the secondary battery.

In some embodiments of this application, the fast ion conductor has a molecular formula of any one of formula (A), formula (B), or formula (C):

$$Li_\alpha M_\beta La_3 Zr_2 O_{12} \qquad (A),$$

where in formula (A), M includes at least one of Ga, Al, or Fe, satisfying $\alpha + 3\beta = 7$, where $\alpha \geq 5.5$ and $\beta \geq 0$;

$$Li_7 La_\gamma R_\delta Zr_2 O_{12} \qquad (B),$$

where in formula (B), R is Ce or Y, satisfying $3\gamma + 3\delta = 9$, where $\gamma \geq 2.5$ and $\delta \geq 0$; and

$$Li_7 La_3 Zr_a X_b Q_c O_{12} \qquad (C),$$

where in formula (C), X and Q are each independently selected from Ta, Nb, Sn, Sb, W, Te, Cr, or Y, satisfying $4(a + b + c) = 8$, where $a \geq 1$, $b \geq 0$, and $c \geq 0$. Using the foregoing fast ion conductor can further improve the safety of the secondary battery.

In some embodiments of this application, the fast ion conductor includes at least one of $Li_7 La_3 Zr_2 O_{12}$, $Li_{6.28} Al_{0.24} La_3 Zr_2 O_{12}$, $Li_{6.25} Ga_{0.25} La_3 Zr_2 O_{12}$, $Li_{6.4} Ga_{0.2} La_3 Zr_2 O_{12}$, $Li_7 La_{2.5} Ce_{0.5} Zr_2 O_{12}$, $Li_7 La_{2.875} Y_{0.125} Zr_2 O_{12}$, or $Li_7 La_3 Zr Nb_{0.5} Y_{0.5} O_{12}$. Using the foregoing fast ion conductor can form an artificial quasi solid electrolyte interface on the surface of the matrix material, protecting the matrix material, and reducing the gas production and temperature rise, thereby improving the safety of the secondary battery.

In some embodiments of this application, the negative electrode material further includes a binder and a conductive agent, where based on a total mass of the negative electrode material, a mass percentage of the matrix material is 80% to 98%, a mass percentage of the fast ion conductor is 0.1% to 16%, and a sum of mass percentages of the binder and the conductive agent is 1% to 4%. Controlling the mass percentage of the fast ion conductor within the foregoing range can ensure high energy density of the secondary battery, reducing the gas production of the secondary battery, thereby improving the safety of the secondary battery.

A second aspect of this application provides a secondary battery including the negative electrode plate according to any one of the foregoing embodiments. Therefore, the secondary battery provided in this application has good stability and safety.

A third aspect of this application provides an electronic apparatus including the secondary battery according to any one of the foregoing embodiments. Therefore, the electronic apparatus provided in this application has good use performance.

Beneficial effects of this application are as follows:

This application provides a negative electrode plate, a secondary battery, and an electronic apparatus. The negative electrode plate includes a negative electrode material. The negative electrode material includes a matrix material, and a fast ion conductor is present on a surface of the matrix material. The fast ion conductor is a lithium lanthanum zirconium oxide. $D_v50$ of the matrix material is $D_1$ μm, and $D_v50$ of the fast ion conductor is $D_2$ μm, where $D_2/D_1 \leq 0.1$ and $0.05 \leq D_2 \leq 1$. The negative electrode plate provided in this application meets the foregoing characteristics, and can reduce gas production and temperature rise of the secondary battery, thereby achieving the technical effect of improving stability and safety of the secondary battery.

Certainly, when any one of the products or methods of this application is implemented, the advantages described above are not necessarily demonstrated all at the same time.

**BRIEF DESCRIPTION OF DRAWINGS**

To describe the technical solutions in some embodiments of this application or in the prior art more clearly, the following briefly describes the accompanying drawings required for describing some embodiments or the prior art. Apparently, the accompanying drawings in the following descriptions show only some embodiments of this application, and persons of ordinary skill in the art may still derive other embodiments from these accompanying drawings.

FIG. 1 is a schematic structural diagram of a fast ion conductor being distributed on a surface of a matrix material in a negative electrode material according to an embodiment of this application; and

FIG. 2 is a cross-sectional scanning electron microscope image of a negative electrode plate in Example 1-1.

**DESCRIPTION OF EMBODIMENTS**

The following clearly and completely describes the technical solutions in some embodiments of this application with reference to the accompanying drawings in some embodiments of this application. Apparently, the described embodiments are only some but not all of the embodiments of this application. All other embodiments obtained by persons of ordinary skill in the art based on some embodiments of this application shall fall within the protection scope of this application.

It should be noted that in the following content, an example in which a lithium-ion battery is used as a secondary battery is used to illustrate this application. However, the secondary battery of this application is not limited to the lithium-ion battery. Specific technical solutions are as follows:

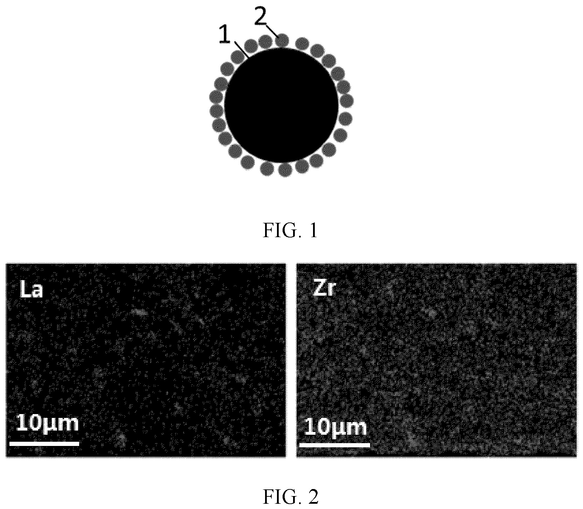

A first aspect of this application provides a negative electrode plate. The negative electrode plate includes a negative electrode material. A schematic structural diagram of a fast ion conductor 2 being distributed on a surface of a matrix material 1 in the negative electrode material is shown in FIG. 1. The fast ion conductor is a lithium lanthanum zirconium oxide. $D_v50$ of the matrix material is $D_1$ μm, and $D_v50$ of the fast ion conductor is $D_2$ μm, where $D_2/D_1 \leq 0.1$ and $0.05 \leq D_2 \leq 1$. In an embodiment, $0.03 \leq D_2/D_1 \leq 0.07$. In an embodiment, $0.3 \leq D_2 \leq 0.7$.

The inventors have found that for the particle size of the fast ion conductor and the particle size of the matrix material, when the value of $D_2/D_1$ is excessively large (for example, greater than 0.1), it leads to poor attachment of the fast ion conductor to the surface of the matrix material, and in turn a uniform quasi solid electrolyte interface cannot be formed, which limits reduction in gas production of the secondary battery and is not conducive to improving safety performance. When the value of $D_2$ is excessively large (for example, greater than 1), it leads to insufficient coverage on the surface of the matrix material, and in turn interface protection is not good enough, which limits reduction in gas production of the secondary battery and is not conducive to improving safety performance. When the value of $D_2$ is

excessively small (for example, less than 0.05), the requirements for production technology and production costs are high, which affects actual use. In this application, cooperatively controlling the type of the fast ion conductor, $D_2/D_1$, and $D_2$ within the foregoing ranges facilitates attachment of the fast ion conductor to the surface of the matrix material, and in turn a uniform quasi solid electrolyte interface is formed, which can improve protective capability of the fast ion conductor on the interface and conductivity of the negative electrode material, reducing gas production and temperature rise of the secondary battery, thereby achieving the technical effect of improving stability and safety of the secondary battery.

In this application, $D_v50$ is a particle size of a material where the cumulative distribution by volume reaches 50% as counted from the small particle size side, and $D_v99$ is a particle size of a material where the cumulative distribution by volume reaches 99% as counted from the small particle size side.

In this application, the fast ion conductor being present on the surface of the matrix material may be that the fast ion conductor partially or entirely coats the surface of the matrix. This is not particularly limited in this application, provided that the objectives of this application can be achieved.

In some embodiments of this application, $D_v99$ of the fast ion conductor is $D_3$ μm, where $0.25 \leq D_2/D_3 < 1$. Specifically, $D_2/D_3$ may be 0.25, 0.3, 0.35, 0.4, 0.45, 0.5, 0.55, 0.6, 0.65, 0.7, 0.75, 0.8, 0.85, 0.9, 0.95, or a value within a range defined by any two of these values. In some embodiments of this application, $0.5 \leq D_2/D_3 \leq 0.67$. Controlling $D_2/D_3$ within the foregoing range can further reduce the gas production of the secondary battery.

The method for controlling $D_v50$ and $D_v99$ of the fast ion conductor is not particularly limited in this application, provided that the objectives of this application can be achieved. For example, $D_v50$ of the fast ion conductor can be adjusted by adjusting grinding time, grinding rotation speed, solid content, and mixing batch, and $D_v99$ of the fast ion conductor can be adjusted by adjusting grinding time, rotation speed, solid content, and mixing batch.

In some embodiments of this application, an ionic conductivity of the fast ion conductor is $1.44 \times 10^{-5}$ S/m to $1.09 \times 10^{-3}$ S/m. Specifically, the ionic conductivity of the fast ion conductor may be $1.44 \times 10^{-5}$ S/m, $4 \times 10^{-5}$ S/m, $6 \times 10^{-5}$ S/m, $8 \times 10^{-5}$ S/m, $1.44 \times 10^{-4}$ S/m, $4 \times 10^{-4}$ S/m, $6 \times 10^{-4}$ S/m, $8 \times 10^{-4}$ S/m, $1.09 \times 10^{-3}$ S/m, or a value within a range defined by any two of these values. Controlling the ionic conductivity of the fast ion conductor within the foregoing range is conducive to further reducing the temperature rise during discharging of the secondary battery.

In some embodiments of this application, the fast ion conductor has a molecular formula of any one of formula (A), formula (B), or formula (C):

$$Li_\alpha M_\beta La_3 Zr_2 O_{12} \qquad (A),$$

where in formula (A), M includes at least one of Ga, Al, or Fe, satisfying $\alpha + 3\beta = 7$, where $\alpha \geq 5.5$ and $\beta \geq 0$;

$$Li_7 La_\gamma R_\delta Zr_2 O_{12} \qquad (B),$$

where in formula (B), R is Ce or Y, satisfying $3\gamma + 3\delta = 9$, where $\gamma \geq 2.5$ and $\delta \geq 0$; and

$$Li_7 La_3 Zr_a X_b Q_c O_{12} \qquad (C),$$

where in formula (C), X and Q are each independently selected from Ta, Nb, Sn, Sb, W, Te, Cr, or Y, satisfying $4(a + b + c) = 8$, where $a \geq 1$, $b \geq 0$, and $c \geq 0$. Using the foregoing fast ion conductor can expand an electrochemical window of the undoped fast ion conductor and improve electrochemical stability of the fast ion conductor, so that the fast ion conductor serves as a more stable and efficient transition layer for conducting lithium ions, which is conducive to further improving the safety of the secondary battery.

In some embodiments of this application, the fast ion conductor includes at least one of $Li_7 La_3 Zr_2 O_{12}$, $Li_{6.28} Al_{0.24} La_3 Zr_2 O_{12}$, $Li_{6.25} Ga_{0.25} La_3 Zr_2 O_{12}$, $Li_{6.4} Ga_{0.2} La_3 Zr_2 O_{12}$, $Li_7 La_{2.5} Ce_{0.5} Zr_2 O_{12}$, $Li_7 La_{2.875} Y_{0.125} Zr_2 O_{12}$, or $Li_7 La_3 Zr Nb_{0.5} Y_{0.5} O_{12}$. Using the foregoing fast ion conductor can form a quasi solid electrolyte interface on the surface of the matrix material, which not only provides diffusion channels for lithium ions but also can suppress side reactions between the matrix material and an electrolyte, protecting the matrix material, and reducing the gas production and temperature rise of the secondary battery, thereby improving the safety of the secondary battery.

In some embodiments of this application, the negative electrode material further includes a binder and a conductive agent, where based on a total mass of the negative electrode material, a mass percentage of the matrix material is 80% to 98%, a mass percentage of the fast ion conductor is 0.1% to 16%, and a sum of mass percentages of the binder and the conductive agent is 1% to 4%. In some embodiments of this application, the mass percentage of the fast ion conductor is 0.1% to 10%. Controlling the mass percentage of the fast ion conductor within the foregoing range not only can ensure high energy density of the secondary battery but also can improve the protective capability of the fast ion conductor on the interface, reducing the gas production and temperature rise of the secondary battery, thereby improving the safety of the secondary battery.

The matrix material is not particularly limited in this application, provided that the objectives of this application can be achieved. For example, the matrix material may include but is not limited to at least one of natural graphite, artificial graphite, mesocarbon microbeads, or a silicon composite material.

In this application, the negative electrode plate may include a negative electrode current collector and a negative electrode active material layer disposed on at least one surface of the negative electrode current collector. The "negative electrode active material layer disposed on at least one surface of the negative electrode current collector" means that the negative electrode active material layer may be disposed on one surface of the negative electrode current collector in its thickness direction, or on two surfaces of the negative electrode current collector in its thickness direction. It should be noted that the "surface" herein may be an entire region or a partial region of the negative electrode current collector. This is not particularly limited in this application, provided that the objectives of this application can be achieved. In this application, the negative electrode active material layer includes the negative electrode material. The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, a composite current collector, or the like. The binder is not particularly limited in this application, provided that the objectives of this application can be achieved. For example, the binder may include but is not limited to one or more of polyacrylate, polyimide, polyamide, polyamideimide, polyvinylidene fluoride, polystyrene butadiene copolymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. The conductive agent is not particularly limited in this application, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. Thicknesses of the negative electrode current collector and the negative electrode active material layer are not particularly limited in this application, provided that the objectives of this application can be achieved. For example, the thickness of the negative electrode current collector is 6 $\mu$m to 12 $\mu$m, and the thickness of the negative electrode active material layer is 30 $\mu$m to 120 $\mu$m. Thickness of the negative electrode plate is not particularly limited in this application, provided that the objectives of this application can be achieved. For example, the thickness of the negative electrode plate is 50 $\mu$m to 250 $\mu$m.

A second aspect of this application provides a secondary battery including the negative electrode plate according to any one of the foregoing embodiments. Therefore, the secondary battery provided in this application has good stability and safety.

In this application, the secondary battery further includes a positive electrode plate, and the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction, or on two surfaces of the positive electrode current collector in its thickness direction. It should be noted that the "surface" herein may be an entire region or a partial region of the positive electrode current collector. This is not particularly limited in this application, provided that the objectives of this application can be achieved.

The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer includes a positive electrode active material, and the positive electrode active material is not particularly limited in this application, provided that the objectives of this application can be achieved. For example, the positive electrode active material may include at least one of lithium nickel cobalt manganese oxide (for example, common NCM811, NCM622, NCM523, and NCM111), lithium nickel cobalt aluminate oxide, lithium iron phosphate, lithium-rich manganese-based material, lithium cobalt oxide ($LiCoO_2$), lithium manganese oxide, lithium manganese iron phosphate, or lithium titanate. The positive electrode material layer further includes a conductive agent and a binder. Types of the conductive agent and the binder are not particularly limited in this application, provided that the objectives of this application can be achieved. For example, the binder may be at least one of the foregoing binders, and the conductive agent may be at least one of the foregoing conductive agents. A mass ratio of the positive electrode active material, the conductive agent, and the binder in the positive electrode material layer is not particularly limited in this application, and persons skilled in the art can make selection based on actual needs, provided that the objectives of this application can be achieved.

Thicknesses of the positive electrode current collector and the positive electrode material layer are not particularly limited in this application, provided that the objectives of this application can be achieved. For example, the thickness of the positive electrode current collector is 6 $\mu$m to 12 $\mu$m, and the thickness of the positive electrode material layer is 30 $\mu$m to 120 $\mu$m. Thickness of the positive electrode plate is not particularly limited in this application, provided that the objectives of this application can be achieved. For example, the thickness of the positive electrode plate is 50 $\mu$m to 250 $\mu$m.

Optionally, the positive electrode plate may further include a conductive layer, and the conductive layer is located between the positive electrode current collector and the positive electrode material layer. Composition of the conductive layer is not particularly limited, and the conductive layer may be a conductive layer commonly used in the art. The conductive layer includes a conductive agent and a binder. The conductive agent and the binder in the conductive layer are not particularly limited in this application, and may be, for example, at least one of the foregoing conductive agents and the foregoing binders.

The secondary battery of this application further includes an electrolyte, and the electrolyte includes a lithium salt and a non-aqueous solvent. The lithium salt may include various lithium salts commonly used in the art, for example, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The non-aqueous solvent is not particularly limited in this application, provided that the objectives of this application can be achieved. For example, the non-aqueous solvent may include but is not limited to at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In this application, the secondary battery further includes a separator. The separator is configured to separate the positive electrode plate from the negative electrode plate to prevent short circuit inside the secondary battery and to allow electrolyte ions to pass through freely without affecting electrochemical charging and discharging processes. The separator is not particularly limited in this application, provided that the objectives of this application can be achieved. For example, material of the separator may include but is not limited to at least one of polyethylene (PE) and polypropylene (PP)-based polyolefin (PO), polyester (for example, polyethylene terephthalate (PET) film), cellulose, polyimide (PI), polyamide (PA), spandex, or aramid. Type of the separator may include at least one of woven film, non-woven film, microporous film, composite film, laminated film, or spinning film.

For example, the separator may include a substrate layer and a surface treatment layer. The substrate layer may be a non-woven fabric, film, or composite film having a porous structure, and material of the substrate layer may include at least one of polyethylene, polypropylene, polyethylene glycol terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer, and the surface treatment layer may be a polymer layer, an inorganic substance layer, or a layer formed by mixing a polymer and an inorganic substance. For example, the inorganic substance layer includes inorganic particles and a binder. The inorganic particle is not particularly limited, and for example, may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be, for example, at least one of the foregoing binders. The polymer layer includes a polymer, and material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The secondary battery of this application further includes a packaging bag for accommodating the positive electrode plate, the separator, the negative electrode plate, the electrolyte, and other components known in the art in the secondary battery. The other components are not limited in this application. The packaging bag is not particularly limited in this application and may be any packaging bag well known in the art, provided that the objectives of this application can be achieved.

In this application, the secondary battery may include but is not limited to a lithium metal secondary battery, a lithium-ion secondary battery (lithium-ion battery), a lithium polymer secondary battery, or a lithium-ion polymer secondary battery.

A preparation process of the secondary battery of this application is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, an electrolyte is injected into the packaging bag, and the packaging bag is sealed to obtain a secondary battery; or a positive electrode plate, a separator, and a negative electrode plate are stacked in sequence, four corners of the entire laminated structure are fixed with tapes to obtain an electrode assembly with a laminated structure, the electrode assembly is put into a packaging bag, an electrolyte is injected into the packaging bag, and the packaging bag is sealed to obtain a secondary battery. In addition, an overcurrent prevention element, a guide plate, and the like may also be placed into the packaging bag as needed, so as to prevent pressure increase, overcharge, and overdischarge inside the secondary battery. The packaging bag is a packaging bag known in the art, and is not limited in this application.

A third aspect of this application provides an electronic apparatus including the secondary battery according to any one of the foregoing embodiments. Therefore, the electronic apparatus provided in this application has good use performance.

Type of the electronic apparatus is not particularly limited in this application and the electronic apparatus may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

**Examples**

The following describes some embodiments of this application more specifically by using examples and comparative examples. Various tests and evaluations are performed according to the following methods. In addition, unless otherwise specified, "part" and "%" are based on mass.

**Test method and device**

**Particle size test:**

$D_v50$ of the matrix material and $D_v50$ and $D_v99$ of the fast ion conductor were measured by using a particle size analyzer.

**Ionic conductivity test:**

Different fast ion conductors were prepared into a high-density ceramic sheet (with a density greater than 0.95) by cold pressing, and gold was sprayed onto two ends of the ceramic sheet to create a blocking electrode. The prepared blocking electrode was subjected to an alternating current impedance test, with a frequency range of 1 MHz to 10 Hz and a perturbation amplitude of 10 mV. The ionic conductivity $\sigma$ was calculated according to the following formula: $\sigma = d/Re \times S$.

d was the thickness of the tested sample (in cm); Re was the impedance of the tested sample (in ohm), which can be obtained from intersections of semicircles and oblique lines in the Nyquist plot (Nyquist plot) of the electrochemical impedance spectroscopy; and S was the effective area of the electrode (in $cm^2$).

**Storage performance test:**

The manufactured secondary battery was prepared. ① The secondary battery was charged to 4.28 V at a constant current of 0.6C and left standing for 15 min, discharged to 3 V at a constant current of 0.5C and left standing for 15 min, and then charged to 4.28 V at a constant current of 0.6C and left standing for 15 min. ② The secondary battery fully charged to 4.28 V was placed in an 80°C high-temperature oven for 24 h and taken out, and the thickness of the secondary battery was measured and recorded as $L_1$; and then the secondary battery was placed in the 80°C high-temperature oven for 24 h and taken out, and the thickness of the secondary battery was measured and recorded as $L_2$.

$$\text{Volume swelling rate after storage} = (L_2/L_1 - 1) \times 100\%.$$

Temperature rise performance test:

The test environment temperature was adjusted to 25°C.
Charging: The secondary battery was charged to 4.28 V at a power of 114 W, then charged to 4.28 V at a constant current of 5.24C, charged to a current of 0.6C at a constant voltage of 4.28 V, and left standing for 0.5 h.
Discharging: The secondary battery was discharged at a constant current of 11.5C, and a temperature sensing wire was attached to the center of the secondary battery to acquire temperature data. During the test, the secondary battery was completely wrapped with thermal insulation cotton.
Temperature rise during discharging was the highest temperature during discharging minus 25°C.

**Example 1-1**

<Preparation of positive electrode plate>

Positive electrode active material NCM523 (with a molecular formula of $LiNiCoMnO_2$), positive electrode binder polyvinylidene difluoride (PVDF), and positive electrode conductive agent conductive carbon black (Super P) were mixed, where a mass ratio of NCM523, PVDF, and Super P was 96:2:2, solvent N-methylpyrrolidone (NMP) was added, and the mixture was mixed to uniformity by a vacuum stirrer, to obtain a positive electrode slurry with a solid content of 75%. The positive electrode slurry was uniformly applied onto one surface of a 10 μm thick positive electrode current collector aluminum foil and dried at 90°C, to obtain a positive electrode plate coated with a 100 μm thick positive electrode material layer on one surface. Then, the same steps were repeated on the other surface of the aluminum foil to obtain a positive electrode plate coated with positive electrode material layers on two surfaces. After cold pressing and slitting, a 74 mm × 867 mm positive electrode plate was obtained.

<Preparation of negative electrode plate>

Matrix material artificial graphite, fast ion conductor $Li_7La_3Zr_2O_{12}$, sodium carboxymethyl cellulose (CMC), styrene-butadiene rubber (SBR), and carbon nanotubes (CNTs) were mixed at a mass ratio of 90:6.5:1:1.5:1, where the particle size $D_1$ of the matrix material was 10 μm, $D_2$ of the fast ion conductor was 0.05 μm, and $D_3$ of the fast ion conductor was 0.18 μm, deionized water was added, and the mixture was mixed to uniformity by a vacuum stirrer, to obtain a negative electrode slurry with a solid content of 45%. The negative electrode slurry was uniformly applied onto one surface of a 10 μm thick negative electrode current collector copper foil and dried at 90°C, to obtain a negative electrode plate coated with a 100 μm thick negative electrode active material layer on one surface. Then, the same steps were repeated on the other surface of the copper foil to obtain a negative electrode plate coated with negative electrode active material layers on two surfaces. After cold pressing and slitting, a 78 mm × 875 mm negative electrode plate was obtained. The cross-sectional scanning electron microscope image of the negative electrode plate is shown in FIG. 2.

<Preparation of electrolyte>

Ethylene carbonate (EC), ethyl methyl carbonate (EMC), and diethyl carbonate (DEC) were mixed to uniformity at a volume ratio of 1:1:1 to obtain an organic solvent. $LiPF_6$ was dissolved in the organic solvent, then vinylene carbonate was added, and the mixture was mixed to uniformity to obtain an electrolyte. Based on a total mass of the electrolyte, a mass percentage of $LiPF_6$ was 12.5%, a mass percentage of the vinylene carbonate was 3%, and a mass percentage of the organic solvent was 84.5%.

<Preparation of separator>

A 14 μm thick porous polypropylene film (provided by Celgard) was used.

<Preparation of lithium-ion battery>

The positive electrode plate, the separator, and the negative electrode plate were stacked sequentially so that the separator was located between the positive electrode plate and the negative electrode plate for separation. Then, the resulting stack was wound to obtain an electrode assembly. The electrode assembly was placed into an aluminum-plastic film, the electrolyte was injected, and the aluminum-plastic film was sealed, followed by processes such as standing, formation, and shaping, to obtain a lithium-ion battery.

**Examples 1-2 to 1-4**

These examples were the same as Example 1-1 except that in <Preparation of negative electrode plate>, the related preparation parameters were adjusted according to Table 1.

**Examples 2-1 to 2-3**

These examples were the same as Example 1-4 except that in <Preparation of negative electrode plate>, the related preparation parameters were adjusted according to Table 2.

**Examples 3-1 to 3-6**

These examples were the same as Example 1-3 except that in <Preparation of negative electrode plate>, the related preparation parameters were adjusted according to Table 3.

**Examples 4-1 to 4-5**

These examples were the same as Example 1-3 except that in <Preparation of negative electrode plate>, the related preparation parameters were adjusted according to Table 4.

**Comparative Example 1-1**

This comparative example was the same as Example 1-1 except <Preparation of negative electrode plate>.

<Preparation of negative electrode plate>

Matrix material artificial graphite, sodium carboxymethyl cellulose (CMC), styrene-butadiene rubber (SBR), and carbon nanotubes (CNTs) were mixed at a mass ratio of 96.5:1:1.5:1, where the particle size $D_1$ of the matrix material was 10 μm, deionized water was added, and the mixture was mixed to uniformity by a vacuum stirrer, to obtain a negative electrode slurry with a solid content of 45%. The negative electrode slurry was uniformly applied onto one surface of a 10 μm thick negative electrode current collector copper foil and dried at 90°C, to obtain a negative electrode plate coated with a 100 μm thick negative electrode active material layer on one surface. Then, the same steps were repeated on the other surface of the copper foil to obtain a negative electrode plate coated with negative electrode active material layers on two surfaces. After cold pressing and slitting, a 78 mm × 875 mm negative electrode plate was obtained.

**Comparative Examples 1-2 to 1-4**

These comparative examples were the same as Example 1-1 except that in <Preparation of negative electrode plate>, the related preparation parameters were adjusted according to Table 1.

**Comparative Examples 2-1 and 2-2**

These comparative examples were the same as Example 1-4 except that in <Preparation of negative electrode plate>, the related preparation parameters were adjusted according to Table 2.

Preparation parameters and electrical performance parameters of the examples and comparative examples are shown in Tables 1 to 4.

**Table 1**

| No. | Matrix material | Fast ion conductor | $D_1$ ($\mu$m) | $D_2$ ($\mu$m) | $D_2/D_1$ | $D_3$ ($\mu$m) | Temperature rise during discharging (°C) | Volume swelling rate after storage |
|---|---|---|---|---|---|---|---|---|
| Example 1-1 | Artificial graphite | $Li_7La_3Zr_2O_{12}$ | 10 | 0.05 | 0.005 | 0.18 | 31.3 | 3.4% |
| Example 1-2 | Artificial graphite | $Li_7La_3Zr_2O_{12}$ | 10 | 0.3 | 0.03 | 0.7 | 31.1 | 3.1% |
| Example 1-3 | Artificial graphite | $Li_7La_3Zr_2O_{12}$ | 10 | 0.7 | 0.07 | 1 | 31.0 | 3.0% |
| Example 1-4 | Artificial graphite | $Li_7La_3Zr_2O_{12}$ | 10 | 1 | 0.1 | 4 | 31.7 | 3.3% |
| Comparative Example 1-1 | Artificial graphite | / | 10 | / | / | / | 34.0 | 7% |
| Comparative Example 1-2 | Artificial graphite | $Li_7La_3Zr_2O_{12}$ | 10 | 1.2 | 0.12 | 4 | 32.2 | 4.2% |
| Comparative Example 1-3 | Artificial graphite | $Li_7La_3Zr_2O_{12}$ | 7 | 1 | 0.14 | 4 | 32.3 | 4.3% |
| Comparative Example 1-4 | Artificial graphite | $Li_7La_3Zr_2O_{12}$ | 5 | 1 | 0.2 | 4 | 32.7 | 4.6 % |
| Note: "/" in Table 1 means that a related preparation parameter does not exist. | | | | | | | | |

It can be learned from Examples 1-1 to 1-4 in Table 1 that when both $0.05 \leq D_2 \leq 1$ and $D_2/D_1 \leq 0.1$ are satisfied, the temperature rise during discharging is low and maintained below 31.7°C, and the volume swelling rate after storage is maintained below 3.5%. Referring to Comparative Example 1-1, when the fast ion conductor is not added to the system, the temperature rise during discharging and the volume swelling rate after storage are both greater than those in Examples 1-1 to 1-4 with the fast ion conductor added. Referring to Comparative Examples 1-3 and 1-4, when the particle size of the fast ion conductor is within the range of this application but $D_2/D_1$ exceeds 0.1, the coverage of the fast ion conductor on the surface of the matrix material is poor, which limits suppression of side reactions between the negative electrode and the electrolyte and reduction in the gas production, so the volume swelling rate after storage exceeds those in Examples 1-1 to 1-4. Referring to Comparative Example 1-2, when the particle size of the fast ion conductor is excessively large and $D_2/D_1$ exceeds 0.1, the coverage of the fast ion conductor on the surface of the matrix material is poor, which limits suppression of side reactions between the negative electrode and the electrolyte and reduction in the gas production. It can be learned from comparison between Comparative Examples 1-3 and 1-4 and Example 1-4 that when the particle sizes of the fast ion conductor are the same but $D_2/D_1$ exceeds 0.1, the coverage of the fast ion conductor on the surface of the matrix material is poor, so the impedance increases, leading to a certain increase in the temperature rise during discharging.

**Table 2**

| No. | Matrix material | Fast ion conductor | $D_2$ ($\mu$m) | $D_3$ ($\mu$m) | $D_2/D_3$ | Temperature rise during discharging (°C) | Volume swelling rate after storage |
|---|---|---|---|---|---|---|---|
| Example 1-4 | Artificial graphite | $Li_7La_3Zr_2O_{12}$ | 1 | 4 | 0.25 | 31.7 | 3.3% |
| Example 2-1 | Artificial graphite | $Li_7La_3Zr_2O_{12}$ | 1 | 2.5 | 0.4 | 31.7 | 3.1% |
| Example 2-2 | Artificial graphite | $Li_7La_3Zr_2O_{12}$ | 1 | 2 | 0.5 | 31.6 | 3.0% |

(continued)

| No. | Matrix material | Fast ion conductor | $D_2$ ($\mu$m) | $D_3$ ($\mu$m) | $D_2/D_3$ | Temperature rise during discharging (°C) | Volume swelling rate after storage |
|---|---|---|---|---|---|---|---|
| Example 2-3 | Artificial graphite | $Li_7La_3Zr_2O_{12}$ | 1 | 1.5 | 0.67 | 31.6 | 3.0% |
| Comparative Example 2-1 | Artificial graphite | $Li_7La_3Zr_2O_{12}$ | 1 | 5 | 0.2 | 32.0 | 3.7% |
| Comparative Example 2-2 | Artificial graphite | $Li_7La_3Zr_2O_{12}$ | 1 | 10 | 0.1 | 32.2 | 3.8% |

Referring to Examples 2-1 to 2-3 in Table 2, when $D_2/D_3 \geq 0.25$, the agglomerated large particles are few and distributed uniformly, so the coverage of the fast ion conductor on the surface of the matrix material is good, resulting in a small volume swelling rate after storage.

Referring to Comparative Examples 2-1 and 2-2 in Table 2, when $D_2/D_3 < 0.25$, the fast ion conductor has many agglomerated large particles, and the coverage of the fast ion conductor on the surface of the matrix material is not uniform enough, which is not conducive to suppressing side reactions between the negative electrode and the electrolyte, thereby affecting the volume swelling rate after storage and the temperature rise during discharging.

**Table 3**

| No. | Matrix material | Fast ion conductor | Ionic conductivity (S/m) | Temperature rise during discharging (°C) | Volume swelling rate after storage |
|---|---|---|---|---|---|
| Example 1-3 | Artificial graphite | $Li_7La_3Zr_2O_{12}$ | $3 \times 10^{-4}$ | 31 | 3.0% |
| Example 3-1 | Artificial graphite | $Li_{6.28}Al_{0.24}La_3Zr_2O_{12}$ | $4 \times 10^{-4}$ | 30.9 | 3.0% |
| Example 3-2 | Artificial graphite | $Li_{6.25}Ga_{0.25}La_3Zr_2O_{12}$ | $3.83 \times 10^{-5}$ | 31.7 | 3.0% |
| Example 3-3 | Artificial graphite | $Li_{6.4}Ga_{0.2}La_3Zr_2O_{12}$ | $1.09 \times 10^{-3}$ | 30.5 | 2.9% |
| Example 3-4 | Artificial graphite | $Li_7La_{2.5}Ce_{0.5}Zr_2O_{12}$ | $1.44 \times 10^{-5}$ | 32 | 3.0% |
| Example 3-5 | Artificial graphite | $Li_7La_{2.875}Y_{0.125}Zr_2O_{12}$ | $2.12 \times 10^{-4}$ | 31.2 | 3.0% |
| Example 3-6 | Artificial graphite | $Li_7La_3ZrNb_{0.5}Y_{0.5}O_{12}$ | $8.29 \times 10^{-4}$ | 30.7 | 2.9% |

Referring to Examples 3-1 to 3-6 in Table 3, when the lithium lanthanum zirconium oxides doped with different elements are used, the ionic conductivities of the fast ion conductors are different, and the temperature rise during discharging and the volume swelling rate after storage are low, greatly reducing the temperature rise during discharging and gas production of the secondary battery. In addition, a greater ionic conductivity of the added fast ion conductor results in more significant reduction in the temperature rise during discharging.

**Table 4**

| No. | Mass percentage of matrix material (%) | Mass percentage of fast ion conductor (%) | Mass percentage of binder (CMC + SBR) (%) | Mass percentage of conductive agent (%) | Temperature rise during discharging (°C) | Volume swelling rate after storage |
|---|---|---|---|---|---|---|
| Example 1-3 | 90 | 6.5 | 1 + 1.5 | 1 | 31 | 3.0% |
| Example 4-1 | 98 | 0.1 | 0.45 + 0.45 | 1 | 31 | 3.0% |
| Example 4-2 | 94.5 | 2 | 1 + 1.5 | 1 | 31 | 3.0% |
| Example 4-3 | 86.5 | 10 | 1 + 1.5 | 1 | 30.9 | 3.0% |
| Example 4-4 | 80 | 16 | 1 + 1 | 2 | 30.8 | 2.9% |
| Example 4-5 | 78 | 18 | 1 + 1 | 2 | 30.8 | 2.9% |

Referring to Table 4, it can be learned from comparison between Example 4-1 and Comparative Example 1-1 that adding the fast ion conductor to the negative electrode material can greatly reduce the volume swelling rate after storage and temperature rise during discharging of the secondary battery. It can be learned from Examples 4-1 to 4-5 that as the mass percentage of the added fast ion conductor increases, the temperature rise during discharging and volume swelling rate after storage can be reduced to some extent, but a decrease in the matrix material affects the energy density of the secondary battery.

It can be learned from FIG. 2 that in the negative electrode plate of this application, La and Zr are uniformly distributed in the negative electrode plate, indicating that the fast ion conductor is uniformly distributed on the surface of the matrix material of the negative electrode plate.

The foregoing descriptions are merely preferred embodiments of this application, and are not intended to limit the protection scope of this application. Any modification, equivalent replacement, improvement, or the like made without departing from the spirit and principle of this application shall fall within the protection scope of this application.

## Claims

1.   A negative electrode plate, comprising a negative electrode material, wherein the negative electrode material comprises a matrix material (1), and a fast ion conductor (2) is present on a surface of the matrix material (1), wherein

the fast ion conductor (2) is a lithium lanthanum zirconium oxide; and
$D_v50$ of the matrix material (1) is $D_1$ $\mu$m, and $D_v50$ of the fast ion conductor (2) is $D_2$ $\mu$m, wherein $D_2/D_1 \leq 0.1$ and $0.05 \leq D_2 \leq 1$.

2.   The negative electrode plate according to claim 1, wherein $0.03 \leq D_2/D_1 \leq 0.07$.

3.   The negative electrode plate according to claim 1, wherein $0.3 \leq D_2 \leq 0.7$.

4.   The negative electrode plate according to claim 1, wherein $D_v99$ of the fast ion conductor (2) is $D_3$ $\mu$m, wherein $0.25 \leq D_2/D_3 < 1$.

5.   The negative electrode plate according to claim 4, wherein $0.5 \leq D_2/D_3 \leq 0.67$.

6.   The negative electrode plate according to any one of claims 1 to 5, wherein an ionic conductivity of the fast ion conductor (2) is $1.44 \times 10^{-5}$ S/m to $1.09 \times 10^{-3}$ S/m.

7.   The negative electrode plate according to claim 6, wherein the ionic conductivity of the fast ion conductor(2) is $3 \times$

$10^{-4}$ S/m to $1.09 \times 10^{-3}$ S/m.

8. The negative electrode plate according to any one of claims 1 to 5, wherein the fast ion conductor (2) has a molecular formula of any one of formula (A), formula (B), or formula (C):

$$Li_a M_\beta La_3 Zr_2 O_{12} \qquad (A),$$

wherein in formula (A), M comprises at least one of Ga, Al, or Fe, $\alpha + 3\beta = 7$, $\alpha \geq 5.5$ and $\beta \geq 0$;

$$Li_7 La_\gamma R_\delta Zr_2 O_{12} \qquad (B),$$

wherein in formula (B), R is Ce or Y, $3\gamma + 3\delta = 9$, $\gamma \geq 2.5$ and $\delta \geq 0$; and

$$Li_7 La_3 Zr_a X_b Q_c O_{12} \qquad (C),$$

wherein in formula (C), X and Q are each independently selected from Ta, Nb, Sn, Sb, W, Te, Cr, or Y, $4(a + b + c) = 8$, $a \geq 1$, $b \geq 0$, and $c \geq 0$.

9. The negative electrode plate according to claim 8, wherein the fast ion conductor (2) comprises at least one of $Li_7 La_3 Zr_2 O_{12}$, $Li_{6.28} Al_{0.24} La_3 Zr_2 O_{12}$, $Li_{6.25} Ga_{0.25} La_3 Zr_2 O_{12}$, $Li_{6.4} Ga_{0.2} La_3 Zr_2 O_{12}$, $Li_7 La_{2.5} Ce_{0.5} Zr_2 O_{12}$, $Li_7 La_{2.875} Y_{0.125} Zr_2 O_{12}$, or $Li_7 La_3 Zr Nb_{0.5} Y_{0.5} O_{12}$.

10. The negative electrode plate according to any one of claims 1 to 9, wherein the negative electrode material further comprises a binder and a conductive agent, wherein based on a total mass of the negative electrode material, a mass percentage of the matrix material (1) is 80% to 98%, a mass percentage of the fast ion conductor (2) is 0.1% to 16%, and a sum of mass percentages of the binder and the conductive agent is 1% to 4%.

11. The negative electrode plate according to claim 10, wherein based on a total mass of the negative electrode material, a mass percentage of the fast ion conductor (2) is 0.1% to 10%.

12. The negative electrode plate according to any one of claims 1 to 11, wherein the matrix material (1) comprises at least one of natural graphite, artificial graphite, mesocarbon microbeads, or a silicon composite material.

13. A secondary battery, comprising the negative electrode plate according to any one of claims 1 to 12.

14. The secondary battery according to claim 13, further comprising a positive electrode plate, wherein the positive electrode plate comprises a positive electrode active material, and the positive electrode active material comprises at least one of lithium nickel cobalt manganese oxide, lithium nickel cobalt aluminate oxide, lithium iron phosphate, lithium-rich manganese-based material, lithium cobalt oxide, lithium manganese oxide, lithium manganese iron phosphate, or lithium titanate.

15. An electronic apparatus, comprising the secondary battery according to claim 13 or 14.

FIG. 1

FIG. 2